# EUROPEAN PATENT APPLICATION

(11) **EP 1 318 626 A1**
(43) Date of publication of application: **11.06.2003**
(21) Application number: 01403211.4
(22) Date of filing: 10.12.2001
(51) Int. Cl.: H04J 11/00

(54) **Improved method of allocating spreading codes**

(71) Applicant: Mitsubishi Electric Information Technology Centre Europe B.V., 1119 NS Schiphol Rijk (NL)
(72) Inventor: Joalland, Pierre-Hugues, Mitsubishi Electric ITE, 35700 Rennes (FR)
(74) Representative: Maillet, Alain

(57) **Abstract**

The invention relates to a method of allocating to a communication channel having a specified transmission rate a spreading code (C_{i,j}) selected from a code tree, including a scanning step for scanning a set of attributes pertaining to each code of the code tree, said scanning being operated starting from a code (C_{1,1}) having a lowest spreading level towards codes C_{16,j} having higher spreading levels.

According to the invention, said scanning is carried out along a single branch (C_{1,1}, C_{2,2}, C_{4,4}, C_{8,7}, C_{16,14}) of the code tree in the course of the allocation of a single code, a sibling code (C_{2,2}) of the code (C_{1,1}) whose attributes are scanned at a given instant being considered eligible for further scanning if at least one code (C_{16,14}) located on a sub-branch sprouting from said sibling code is available and has a length which is compatible with the specified transmission rate.

## Description

The present invention relates to a method of allocating to a communication channel having a specified transmission rate a spreading code selected from a code tree, which method includes a scanning step for scanning a set of attributes pertaining to each code of the code tree, said scanning being operated starting from a code having a lowest spreading level towards codes having higher spreading levels.

In a currently used telecommunication system for mobiles of the Code Division Multiple Access type, usually referred to as CDMA system, spreading codes are used for differentiating one user of the system from another. Codes having variable lengths are used for this purpose, which codes have the particularity on the one hand of being orthogonal with respect to each other even if they have different lengths, and on the other hand of having variable spreading lengths, each length being identified by means of a specific spreading factor. Such codes with a variable spreading factor are selected from code trees. A code tree features a plurality of spreading factors SFi (with i=2^{k} and k=0 to N-1), where N is the total number of spreading factors available in a given system, determined by the number of communications the system is able to handle simultaneously. To each spreading factor SFi corresponds i different spreading codes C_{i,j}, (with j=1 to i). Each spreading code is thus doubly indexed, a first index i corresponding to a level of the spreading factor, while the other index j corresponds to an order in the latter level.

Each base station included in a CDMA system is responsible for allocating a spreading code to each communication channel between said base station and a mobile transceiver communicating with the base station. In order to preserve orthogonality between allocated spreading codes, a code of a given level can be allocated only if no other code in a same branch of the code tree, upstream or downstream, has already been allocated. Thus, a code C_{4,2} cannot be allocated if, for example, one of the codes C_{2,1} or C_{8,3} has already been allocated. On the other hand, since codes C_{8,3} and C_{8,4} belong to two different sub-branches sprouting from code C_{4,2}, code C_{8,4} will still be available for allocation if only code C_{8,3} has already been allocated. The allocation of a code having a low spreading level thus results in many non-allocatable codes.

Spreading codes with variable spreading factors are used according to the orthogonal codes still available and to the transmission rates which they allow. A telecommunication channel associated with a code having a high spreading level, and thus a substantial length, will have a potentially low transmission rate, whereas a channel associated with a code having a low spreading level, and thus being far shorter than the above-mentioned high level code, will have a potentially high transmission rate. In other words, codes having low spreading factors allow higher transmission rates than codes having high spreading factors.

A first known method for allocating a code to a communication channel having a specified transmission rate consists in scanning the code tree for available codes, i.e. codes which have not already been allocated and of which no downstream or upstream code has already been allocated, and allocating to said channel the first available code which is compatible with the specified transmission rate.

This known method does not search for further allocatable codes which, though having a higher spreading level than the first available and compatible code, would also be compatible with the specified transmission rate. This generates a waste of ressources for the following reasons :

Since codes having low spreading levels are scarcer than codes having high spreading levels, such codes should be allocated only if necessary for compliance with the specified data rates, and should not be wasted by allocating them if codes having higher spreading levels are available and compatible with the specified data rates.

Furthermore, as has been explained above, allocation of a code prohibits future allocation of codes located upstream or downstream of the allocated code. This means that allocation of a code having a low spreading level, which thus has many downstream codes and will cause all these downstream codes to become unavailable, should be done only if necessary with respect to the specified transmission rate.

A second known method aims at solving the above-mentioned problems by systematically scanning the whole code tree and selecting for allocation a code which has been identified as having the highest spreading level among all codes which are compatible with the specified transmission rate. This method, while avoiding unnecessary waste of resources as far as the allocation of codes is concerned, requires a substantial amount of computing power in order to perform the scanning of the whole code tree, and is thus costly to implement in practice.

The present invention aims at solving the above-mentioned problems, by providing a method of allocating spreading codes to communication channels, which requires less computing power than the second known method described above, and according to which allocation of low-level spreading codes is restricted to channels for which allocation of such low-level codes is actually necessary.

To this end, according to one aspect of the invention, in a method as described in the opening paragraph, the scanning is carried out along a single branch of the code tree in the course of the allocation of a single code, a sibling code of the code whose attributes are scanned at a given instant being considered eligible for further scanning if at least one code located on a sub-branch sprouting from said sibling code is available and has a length which is compatible with the specified transmission rate, the code whose attributes have last been scanned before the end of the scanning constituting the selected code to be allocated to said channel.

In the method according to the invention, the scanning is limited to only one of the possible paths which lead from the spreading code having the lowest level to one of the highest-level codes. This scanning may even be interrupted before all levels are actually scanned, if no further code is allocatable or compatible with the specified transmission rate. This enables to reduce the computing power required to implement the method according to the invention with respect to that needed for implementing the second known method. Waste of low-level spreading codes is however reduced with respect to the first known method, since an in-depth scanning of the code tree is yet performed in the method according to the invention, which enables to identify an available code of the highest compatible level with respect to the specified transmission rate.

In order to perform the scanning of a single branch called for by the invention, a decision has to be made at each spreading level, regarding the next spreading code whose attributes are next to be scanned.

According to another aspect of the invention, a choice between two sibling codes which are eligible for further scanning is determined on the basis of at least one criterion other than compatibility with the specified transmission rate.

As will be explained hereinafter, this aspect of the invention enables to further reduce waste of low-level codes by targeting zones of the code trees where previous code allocations have already rendered some low-level codes unavailable, without having effectively allocated these codes, which means that the zones thus targeted still may include higher-level codes which could be allocated without reducing the number of still available lower-level codes.

In a particular embodiment of the invention, said criterion consists in a load difference between loads of sub-branches of the code tree which sprout from the sibling codes, the load of the sub-branch sprouting from a given code being one of the attributes pertaining to said code.

The load of a sub-branch can be defined in various ways. In an advantageous embodiment of the invention, the load of a sub-branch is defined by a load ratio between the number of allocated codes among the codes forming said sub-branch and the total number of available codes of the highest possible spreading level included in said sub-branch.

In a preferred embodiment of the invention, the load of a sub-branch is defined by the highest possible number of codes which could become filled-up by allocation of a code included in said sub-branch, a filled-up code being defined as a code from which each sprouting sub-branch no longer includes any available code.

This definition of the load enables to aim for codes whose allocation fills up whole zones of the code tree, which contributes to minimizing waste of available codes.

The set of attributes will advantageously be modified in real time so as to make sure that each new allocation of a code will be taken into account in the following scanning steps. According to yet another aspect of the invention, a method as described above will thus advantageously include an updating step for updating the set of attributes after allocation of a previously non-allocated code.

The invention also relates to a telecommunication system featuring communication channels between at least one base station and users of the system, in which each channel is differentiated from the others by a spreading code allocated to said channel by means of a method as described hereinbefore.

The characteristics of the invention mentioned above, as well as others, will emerge more clearly from a reading of the following description given in relation to the accompanying figures, amongst which:
Fig. 1 is a functionnal diagram describing a telecommunication system in which the invention is used,
Fig.2 is a schematic which depicts a code tree used in such a telecommunication system,
Fig3 is a flow chart which depicts an embodiment of a scanning step used in a method for allocating codes according to the invention, and
Fig.4 is a flow chart which depicts an embodiment of an updating step used in a method for allocating codes according to a variant of the invention.

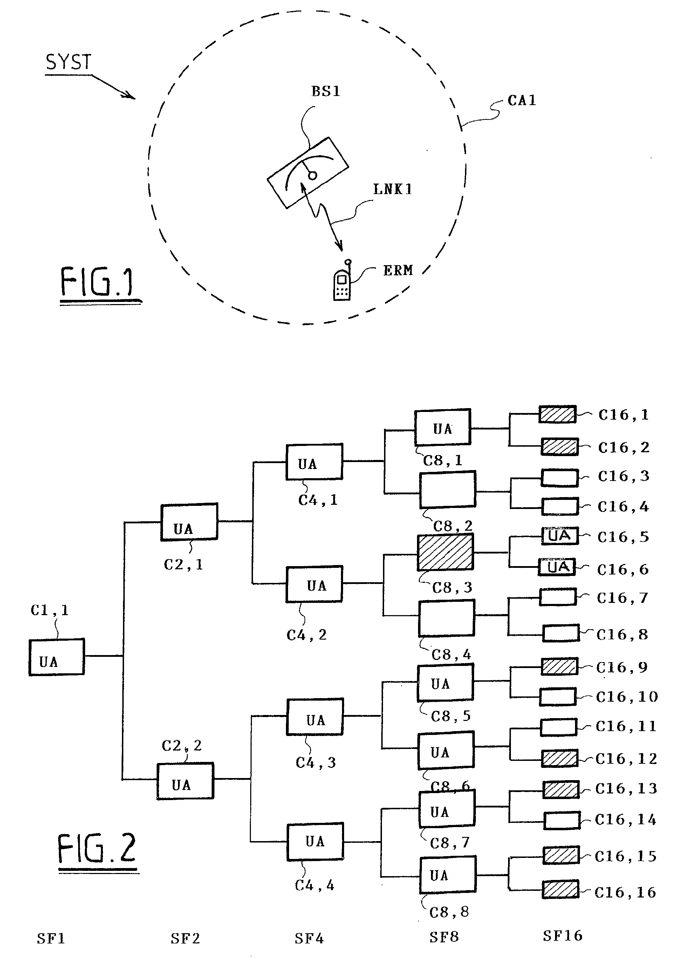

Fig.1 shows a highly simplified telecommunication system SYST, which includes a radio base station BS1 and a mobile user ERM, which, when located in a coverage area CA1 of base station BS1, may communicate with said base station BS1 by means of a communication channel LNK1. In order to differentiate this communication channel LNK1 from others the base station BS1 may use for communicating with other mobile users, not shown in this picture, said base station will allocate a specific spreading code to this communication channel LNK1, the nature of this code, particularly its length, being determined by a data rate specified by mobile user ERM.

Fig.2 shows a code tree constituted by spreading codes C_{i,j} of five different spreading levels (with i=2^{k} and k=0 to 4), identified by associated spreading factors SFi. Upon receiving from a mobile user an allocation request specifying a given data rate, a base station searches the code tree for a suitable code to be allocated to the communication channel linking the base station to the mobile user. The spreading codes are orthogonal with respect to each other and have variable lengths, each length being identified by means of a specific spreading factor. To each spreading factor SFi corresponds i different spreading codes C_{i,j}, (with j=1 to i). Each spreading code is thus doubly indexed, a first index i corresponding to a level of the spreading factor, while the other index j corresponds to an order in the latter level.

In the example described here, already allocated codes have been represented as grey boxes. In order to preserve orthogonality between allocated spreading codes, a code of a given level can be allocated only if no other code in a same branch of the code tree, upstream of downstream, has already been allocated. Thus, code C_{4,2} cannot be allocated since in this example, code C_{8,3} has already been allocated. Code C_{4,2} will thus be considered "unavailable", which is shown by the letters UA placed in the corresponding box. On the other hand, since codes C_{8,3} and C_{8,4} belong to two different sub-branches sprouting from code C_{4,2}, code C_{8,4} is still available for allocation, which is shown by a corresponding blank box. The allocation of a code having a low spreading level thus results in many non-allocatable codes. In this example, allocation of code C_{8,3} has caused both sibling codes C_{16,5} and C_{16,6} to become unavailable.

Codes having low spreading factors allow higher transmission rates than codes having high spreading factors. The invention enables to avoid waste of low-level spreading codes, by performing an in-depth scanning of the code tree, which enables to identify available codes of the highest compatible level with respect to the specified transmission rates. Thanks to the invention, such in-depth scanning doesn't require prohibitive amounts of computing power, since the scanning is carried out along a single branch of the code tree in the course of the allocation of a single code, a sibling code of the code whose attributes are scanned at a given instant being considered eligible for further scanning if at least one code located on a sub-branch sprouting from said sibling code is available and has a length which is compatible with the specified transmission rate, the code whose attributes have last been scanned before the end of the scanning constituting the selected code to be allocated to said channel.

The operation of the method according to the invention can be described as follows : if a request for allocation specifies a data rate compatible with the fifth level spreading factor SF16, a method such as the second known method described above would determine, by performing a scanning of the whole code tree, that codes C_{16,3}, C_{16,4}, C_{16,7}, C_{16,8}, C_{16,10}, C_{16,11}, and C_{16,14} are available and compatible with the specified datarate. Such a scanning would however require a prohibitive amount of computing power, if performed in more realistic operating conditions, where more than ten different spreading levels are available and hundreds of communication must be handled simultaneously by a same base station. According to the invention, during each scanning step, only a single branch of the code tree is analyzed. The attributes of code C_{1,1} indicate that both sibling codes C_{2,1} and C_{2,2} of code C_{1,1} are eligible for further scanning, since at at least one code located on a sub-branch sprouting from each sibling code C_{2,1} and C_{2,2} is available and has a length which is compatible with the specified transmission rate. A choice then has to be made between said sibling codes.

This choise may be made according to rank order, e.g. the sibling code having the lowest rank, as in this case C_{2,1}, would be preferred to other eligible sibling codes of the same level, as in this case C_{2,2}. Such a citerion will not, however, lead to optimal results. In this example, code C_{4,1} would thus be chosen, then code C_{8,2}, and finally code C_{16,3}, which in turn would cause code C_{8,2} to become unavailable. By choosing another criterion, the same constraints could have led to the allocation of an available code located downstream of an already unavailable code, like C_{16,10}, C_{16,11}, or C_{16,14}. Using rank number as the criterion of choice between two sibling codes, though enabling ultimate allocation of a suitable code, may thus lead to waste of low-level codes.

An advantageous alternative consists in using, as the criterion of choice between two sibling codes, a load difference between loads of sub-branches of the code tree which sprout from the sibling codes, the load of the sub-branch sprouting from a given code being one of the attributes pertaining to said code.

The load of a sub-branch can be defined by a ratio between the number of allocated codes among the codes forming said sub-branch and the total number of available codes of the highest possible spreading level included in said sub-branch. In the present example, the load ratio of the sub-branch sprouting from code C_{2,1} would be 3/4, while the load ratio of the sub-branch sprouting from code C_{2,2} would be 5/3, and code C_{2,2} would thus be selected for further scanning, followed by codes C_{4,4}, whose load ratio is 3/1 whereas the load ratio of code C_{4,3} is 2/2. Code C_{8,8} being uneligible for further scanning, since both of its sibling codes C_{16,15} and C_{16,16} are already allocated, code C_{8,7} would then be chosen, and the scanning would stop at code C_{16,14}, which would then be allocated without unnecessarily causing any formerly available lower-level code to become unavailable, since the upstream code C_{8,7} of code C_{16,14} was already unavailable because of previous allocation of its other sibling code C_{16,13}.

Using the load of a sub-branch as a criterion for choosing between two sibling codes thus enables to direct the search for the code to be allocated towards zones of the code trees which contain the most already allocated codes, which enables to reduce unnecessary occupation of less-loaded areas, which in turn would generate waste of low-level codes.

The load of a sub-branch can also be defined, with the same general purpose of targeting already occupied zones of the code tree, by the highest possible number of codes which could become filled-up by allocation of a code included in said sub-branch, a filled-up code being defined as a code from which each sprouting sub-branch no longer includes any available code. This number will next be referred to as crown factor.

In the example described here, the crown factor of code C_{16,7}, noted CF(C_{16,7}), is equal to 1, because code C_{16,7} itself would be filled-up but code C_{16,8} would still be available, which means that allocation of code C_{16,7} would not cause its immediate upstream code C_{8,4} to become filled-up. The crown factors CF(C_{16,10}) and CF(C_{16,11}) of codes C_{16,10} and C_{16,11} is equal to 2, since their respective immediate upstream codes C_{8,5} and C_{8,6} would become filled-up by allocation of one of codes C_{16,10} and C_{16,11}, codes C_{16,9} and C_{16,12} being already allocated, but code C_{4,3} would not become filled-up by allocation of only one of codes C_{16,10} and C_{16,11}, since the other would still be available. The crown factor of code C_{16,14} is equal to 3, since its upstream codes C_{8,7} and C_{4,4} would become filled-up by allocation of code C_{16,14}, codes C_{16,15} and C_{16,16} being already allocated, thus filling-up code C_{8,8}.

Thus, the highest crown factor, in this case CF(C_{16,2}), of a code carried by the sub-branch sprouting from the sibling code C_{2,1} of root code C_{1,1} is 2, while the highest crown factor, in this case CF(C_{16,14}), of a code carried by the sub-branch sprouting from the sibling code C_{2,2} of root code C_{1,1} is 3, which entails that sibling code C_{2,2} will be chosen for further scanning after scanning of the attributes pertaining to root code C_{1,1}, followed by codes C_{4,4}, C_{8,7} and finally code C_{16,14} which features the highest crown factor.

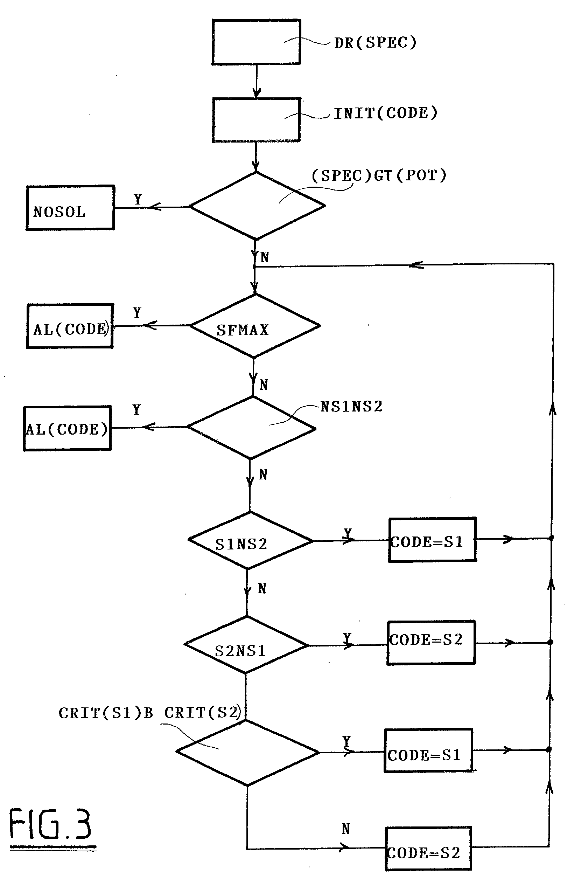

Fig.3 depicts the operation of a method for allocating a spreading code according to the invention. In a first sub-step DR(SPEC), a request for allocation of such a code is received, said request including a specified data rate value SPEC. In a following sub-step INIT(CODE), root code C_{1,1} is identified as the current code CODE whose attributes are to be scanned. In a following testing sub-step (SPEC)GT(POT), the specified data rate value SPEC is compared to a potential value POT representative of the highest data rate offered by a sub-branch sprouting from the current spreading code CODE. If the potential value POT is lower than the specified data rate value SPEC, a message stating that the specified data rate exceeds the capabilities of the system is issued during a following step NOSOL. Conversely, if the specified data rate value SPEC is lower than the potential value POT associated with the current code CODE, a next testing sub-step SFMAX is triggered, during which the spreading level of the current spreading code CODE is compared to the highest possible spreading level afforded by the system. In case of equality, which means that the current spreading code CODE has no sibling codes, said current spreading code CODE is allocated in a following sub-step AL(CODE). Conversely, if the current spreading code CODE has siblings, a next testing sub-step NS1NS2 is triggered, which aims at determining if both sibling codes, noted S1 and S2, are uneligible for further scanning, a sibling code being considered as eligible for further scanning if at least one code located on a sub-branch sprouting from said sibling code is available and has a length which is compatible with the specified transmission rate. If both sibling codes S1 and S2 are found uneligible for further scanning, the scanning will be stopped and the current spreading code CODE will be allocated in a following sub-step AL(CODE). Conversely, if one of the siblings S1 or S2 of the current spreading code CODE is eligible for further scanning, a next testing sub-step S1NS2 is triggered, which aims at determining if the sibling code S2 of the current spreading code CODE is ineligible for further scanning. If such is the case, the current spreading code CODE is replaced by the other sibling code S1 in a following sub-step CODE=S1, and the process described above will be be resumed, with sibling code S1 as new current spreading code CODE, starting from sub-step SFMAX. If it is determined during sub-step S1NS2 that sibling code S2 is eligible for further scanning, a next testing sub-step S2NS 1 is triggered, which aims at determining if the other sibling code S1 of the current code CODE is ineligible for further scanning. If such is the case, the current spreading code CODE is replaced by sibling code S2 in a following sub-step CODE=S2, and the process described above will be be resumed, with sibling code S2 as new current spreading code CODE, starting from sub-step SFMAX. If it is determined, following sub-step S2NS1, that both sibling codes S1 and S2 are eligible for further scanning, a choice of which of sibling codes S1 and S2 should be elected for further scanning must be made. This choice will be made by means of a next testing sub-step CRIT(S1)BCRIT(S2) during which is determined which sibling code, S1 or S2, best meets a choice criterion such as those described above, e.g. which of the sub-branches sprouting from said sibling codes S1 and S2 is the most loaded, i.e. has the largest load ratio or features the highest crown factor. If this criterion is best met by sibling code S1 the current spreading code CODE is replaced by sibling code S1 in a following sub-step CODE=S1, and the process described above will be be resumed, with sibling code S1 as new current spreading code CODE, starting from sub-step SFMAX. If the choice criterion is best met by sibling code S2, the current spreading code CODE is replaced by the other sibling code S2 in a following sub-step CODE=S2, and the process described above will be be resumed, with sibling code S2 as new current spreading code CODE, starting from sub-step SFMAX.

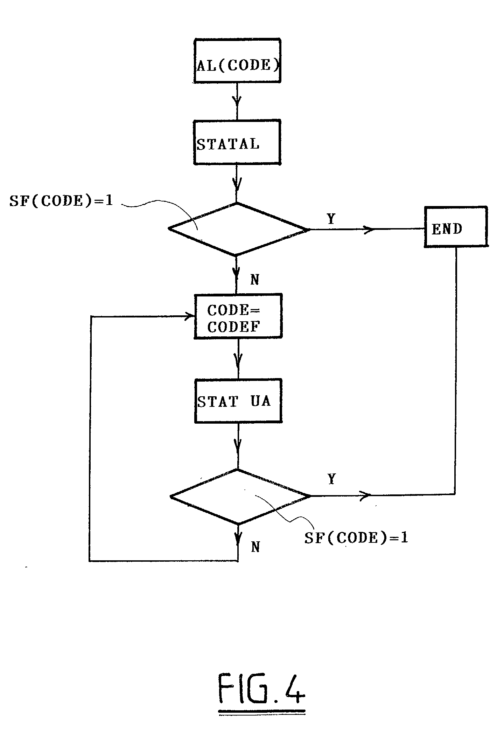

Fig.4 depicts the operation of an updating step included in a method for allocating a spreading code according to another aspect of the invention. In a first sub-step AL(CODE), a current spreading code CODE is allocated to a communication channel shared by a radio base station and a mobile user who has requested such an allocation. In a following step STATAL, a status attribute pertaining to said current code CODE is set to "allocated". In a following testing sub-step SF(CODE)=1, the spreading level of the current code CODE is compared to the level 1 of the root code C_{1,1}. If said current code CODE is thus found to be the root code C_{1,1}, no further updating is necessary and the process is ended by an ending step END. If the current code CODE is not the root code C_{1,1}, said current code CODE is replaced by its immediately upstream spreading code, referred to as "father code" and noted CODEF, in a following sub-step CODE=CODEF. In a following step STATUA, the status attribute pertaining to this new current code CODE is set to "unavailable". In a following testing sub-step SF(CODE)=1, the spreading level of the new current code CODE is compared to the level 1 of the root code C_{1,1}. If said current code CODE is thus found to be the root code C_{1,1}, no further updating is necessary and the process is ended by an ending step END. If the current code CODE is not the root code C_{1,1}, said current code CODE is replaced by its father code CODEF in a following sub-step CODE=CODEF, and the process descibed abobe will be repeated until reaching the ending step END.

## Claims

1. A method of allocating to a communication channel having a specified transmission rate a spreading code selected from a code tree, including a scanning step for scanning a set of attributes pertaining to each code of the code tree, said scanning being operated starting from a code having a lowest spreading level towards codes having higher spreading levels, method according to which said scanning is carried out along a single branch of the code tree in the course of the allocation of a single code, a sibling code of the code whose attributes are scanned at a given instant being considered eligible for further scanning if at least one code located on a sub-branch sprouting from said sibling code is available and has a length which is compatible with the specified transmission rate, the code whose attributes have last been scanned before the end of the scanning constituting the selected code to be allocated to said channel.

2. A method according to claim 1, wherein a choice between two sibling codes of a same spreading level which are eligible for further scanning is determined on the basis of at least one criterion other than compatibility with the specified transmission rate.

3. A method according to claim 2, wherein said criterion consists in a load difference between loads of sub-branches of the code tree which sprout from the sibling codes, the load of the sub-branch sprouting from a given code being one of the attributes pertaining to said code.

4. A method according to claim 3, wherein the load of a sub-branch is defined by a load ratio between the number of allocated codes among the codes forming said sub-branch and the total number of available codes of the highest possible spreading level included in said sub-branch.

5. A method according to claim 3, wherein the load of a sub-branch is defined by the highest possible number of codes which could become filled-up by allocation of a code included in said sub-branch, a filled-up code being defined as a code from which each sprouting sub-branch no longer includes any available code.

6. A method according to any one of claims 1 to 5, further including an updating step for updating the set of attributes after allocation of a previously non-allocated code.

7. A telecommunication system featuring communication channels between at least one base station and users of the system, in which each channel is differentiated from the others by a spreading code allocated to said channel by means of a method according to one of the claims 1 to 6.
